# NEUE EUROPÄISCHE PATENTSCHRIFT

(11) **EP 3 077 462 B2**
(45) Veröffentlichungstag und Bekanntmachung des Hinweises auf die Entscheidung über den Einspruch: **08.11.2023**
(45) Hinweis auf die Patenterteilung: 04.03.2020
(21) Anmeldenummer: 14816127.6
(22) Anmeldetag: 03.12.2014
(51) Int. Cl.: C09D 5/00

(54) **VERFAHREN ZUR HERSTELLUNG EINES BESCHICHTUNGSMITTELS**
METHOD FOR PRODUCING A COATING AGENT
PROCÉDÉ DE FABRICATION D'UN MILIEU DE REVÊTEMENT

(30) Priorität: 06.12.2013 EP 13005689
(43) Veröffentlichungstag der Anmeldung: 12.10.2016
(73) Patentinhaber: THOR GmbH, 67346 Speyer (DE)
(72) Erfinder: BAUM, Rüdiger, 68753 Waghäusel (DE); HAHN, Peter Erich, 68626 Lampertheim (DE); WUNDER, Thomas, 67435 Neustadt a.d. Weinstrasse (DE)
(86) Internationale Anmeldenummer: PCT/EP2014/003216
(87) Internationale Veröffentlichungsnummer: WO 2015/082063

(56) Entgegenhaltungen:
- EP-A1- 0 676 140
- EP-A1- 0 900 525
- WO-A1-02/17716
- WO-A1-99/08530
- WO-A2-2007/026004
- DE-A1- 19 810 819
- COLLIER P.J et al.: "Chemical reactivity of some isothiazolone biocides", Journal of Applied Bacteriology, vol. 69, 1990, pages 578-584, DOI: 10.1111/j.1365-2672.1990.tb01551.x

## Beschreibung

Die vorliegende Erfindung betrifft ein Verfahren zum Herstellen eines Beschichtungsmittels, wie einer Farbe oder eines Putzes, mit einem 5-Chlor-2-methyl-4-isothiazolon-Gehalt im Bereich von 0 bis 1 ppm, unter Verwendung von Komponenten, die in Summe über 1,5 ppm 5-Chlor-2-methyl-4-isothiazolon in das Beschichtungsmittel eintragen würden.

Konservierungsmittel werden in vielen wässrigen Systemen eingesetzt, um mikrobielles Wachstum zu bekämpfen. Ein wichtiges Anwendungsgebiet ist die Konservierung von Beschichtungsmitteln, wie Farben und Putzen, da diese dem mikrobiologischen Abbau unterliegen und verderben, wenn ihnen keine Konservierungsmittel zugesetzt werden.

Um eine langfristige Haltbarkeit der Beschichtungsmittel zu gewährleisten, wird deshalb der Großteil aller heute verfügbaren Beschichtungsmittel auf Wasserbasis für Innen- und Außenanstriche mit Konservierungsmitteln aus der Familie der Isothiazolinone versetzt.

In diesem Zusammenhang kommt beispielsweise die in der EP 1 005 271 B1 offenbarte Mischung der Isothiazolinone 2-Methylisothiazolin-3-on (MIT) und 1,2-Benzisothiazolin-3-on (BIT) zum Einsatz. Diese Mischung wird von der Thor GmbH (Speyer, Bundesrepublik Deutschland) als Acticide^{®} MBS vertrieben und stellt zu heutiger Zeit den Standard bei der Gebindekonservierung von wasserbasierenden Farben und Putzen dar und hat den Vorteil, dass sie durch die gezielte Auswahl der beiden Isothiazolinone eine hohe Wirksamkeit mit einem geringen Sensibilisierungspotential vereint.

Dass der Kontakt mit Isothiazolonen allergische Reaktionen auslösen kann, ist seit Jahren bekannt. Dabei weist das 5-Chlor-2-methyl-4-isothiazolon (CIT) das mit Abstand größte sensibilisierende Potenzial auf. Da dieses jedoch, verglichen mit dem 2-Methylisothiazolin-3-on (MIT) eine um bis zu 100-fach höhere antimikrobielle Wirksamkeit aufweist, findet dies noch immer Einsatz bei der Konservierung von Bestandteilen für Beschichtungsmittel, wie Farben oder Putzen.

Ein wesentlicher Bestandteil von Farben bzw. Putzen ist das Bindemittel bzw. die Polymeremulsion, die vor der Herstellung des entsprechenden Beschichtungsmittels meist bereits das kostengünstige und hochwirksame 5-Chlor-2-methyl-4-isothiazolon in einer Menge im Bereich von 5 bis 20 ppm enthält. Dies führt dazu, dass ein Beschichtungsmittelhersteller bei der Verwendung einer solchen Polymeremulsion ein Beschichtungsmittel mit einem signifikanten Gehalt an 5-Chlor-2-methyl-4-isothiazolon herstellt.

Aufgrund des vergleichsweise hohen sensibilisierenden Potentials des 5-Chlor-2-methyl-4-isothiazolons ist es jedoch wünschenswert, dass dies in möglichst geringen Mengen, in einem Bereich von 0 bis 1 ppm, in Beschichtungsmitteln enthalten ist.

Aufgabe der vorliegenden Erfindung ist es daher, ein Verfahren zur Verfügung zu stellen, mit dem es möglich ist, unter der Verwendung von Komponenten, die in Summe über 1,5 ppm 5-Chlor-2-methyl-4-isothiazolon in ein Beschichtungsmittel eintragen würden, ein Beschichtungsmittel ausgewählt aus Farben und Putzen mit einem 5-Chlor-2-methyl-4-isothiazolon-Gehalt im Bereich von lediglich 0 bis 1 ppm herzustellen.

Gelöst wird diese Aufgabe durch ein Verfahren zum Herstellen eines Beschichtungsmittels ausgewählt aus Farben und Putzen mit einem 5-Chlor-2-methyl-4-isothiazolon-Gehalt im Bereich von 0 bis 1 ppm, unter Verwendung von Komponenten, die in Summe über 1,5 ppm 5-Chlor-2-methyl-4-isothiazolon in das Beschichtungsmittel eintragen würden, umfassend die Schritte:
a) Zersetzen des in den Komponenten des Beschichtungsmittels enthaltenen 5-Chlor-2-methyl-4-isothiazolons, mit Hilfe wenigstens einer 5-Chlor-2-methyl-4-isothiazolon-zersetzenden Verbindung, so dass der Gehalt an 5-Chlor-2-methyl-4-isothiazolon innerhalb eines Zeitraums von weniger als 24Stunden in einem Bereich von 0 bist ppm liegt,
b) Vermischen der einzelnen Bestandteile des Beschichtungsmittels, nichtabschließend ausgewählt aus der Gruppe umfassend Wasser, Bindemittel, Pigment, Netzmittel, Verdicker, Tixotropiennittel, pH regulierenden Verbindungen, Füllstoffen und Dispergiermitteln, und
c) Hinzugeben wenigstens eines Konservierungsmittels ausgewählt aus der Gruppe bestehend aus 2-Methylisothiazolin-3-on (MIT), 1,2-Benzisothiazolin-3-on (BIT), N-Methyl-1,2-benzisothiazolin-3-on (M-BIT) und 2-n-Octylisothiazolin-3-on (OIT),
dadurch gekennzeichnet, dass das in Verfahrensschritt c) hinzugegebene, wenigstens eine Konservierungsmittel durch die wenigstens eine 5-Chlor-2-methyl-4-isothiazolon-zersetzenden Verbindung über einen Zeitraum von 24 Stunden zu weniger als 10% zersetzt wird.

Das Verfahren gemäß der vorliegenden Erfindung zeichnet sich in vorteilhafter Weise dadurch aus, dass das Verfahren es ermöglicht, unter Verwendung von Komponenten, die in Summe über 1,5 ppm 5-Chlor-2-methyl-4-isothiazolon in das Beschichtungsmittel eintragen würden, ein Beschichtungsmittel mit einem vernachlässigbar geringen Gehalt an 5-Chlor-2-methyl-4-isothiazolon herzustellen, so dass die allergisierende Wirkung des 5-Chlor-2-methyl-4-isothiazolons auf den Endverbraucher zumindest weitgehend minimiert werden kann.

Ein weiterer Vorteil des erfindungsgemäßen Verfahrens liegt darin, dass mit Hilfe der in Verfahrenschritt a) eingesetzten wenigstens einen Verbindung das 5-Chlor-2-methyl-4-isothiazolon innerhalb eines Zeitraumes von 24 Stunden nahezu selektiv abgebaut wird, ohne dass die zur weiteren Konservierung des Beschichtungsmittels eingesetzten Isothiazolinone, die zur gleichen chemischen Familie, wie das 5-Chlor-2-methyl-4-isothiazolongehören, zersetzt werden.

Beschichtungsmittel bedeutet im Sinne der vorliegenden Erfindung eine wasserbasierende Farbe oder einen Putz. Die Farbe kann dabei eine Farbe für den Innenbereich oder eine Farbe für den Außenbereich sein. Der Putz kann ebenfalls ein Putz für den Außenbereich wie auch für den Innenbereich sein. Gemäß einer bevorzugten Ausführungsform der Erfindung handelt es sich bei dem Beschichtungsmittel um eine Farbe mit einem pH-Wert im Bereich von 7,5 bis 10, bevorzugt um eine Farbe mit einem pH-Wert im Bereich von 7,5 bis 9,0. Gemäß einer bevorzugten Ausführungsform der Erfindung handelt es sich bei dem Beschichtungsmittel um einen Putz mit einem pH-Wert im Bereich von 8 bis 11, bevorzugt um eine Farbe mit einem pH-Wert im Bereich von 8,5 bis 10,5.

Herstellung des Beschichtungsmittels unter der Verwendung von Komponenten, die in Summe über 1,5 ppm 5-Chlor-2-methyl-4-isothiazolon in das Beschichtungsmittel eintragen würden, bedeutet im Sinne der vorliegenden Erfindung, dass die Gesamtmenge an 5-Chlor-2-methyl-4-isothiazolon, welches durch die einzelnen Komponenten, die bei der Herstellung des Beschichtungsmittels eingesetzt werden, bezogen auf das fertige Beschichtungsmittel in Summe über 1,5 ppm liegt. Gemäß der Erfindung liegt der Gesamtgehalt an 5-Chlor-2-methyl-4-isothiazolon, der durch die einzelnen Bestandteile des Beschichtungsmittels eintragen wird, bezogen auf das gesamte Beschichtungsmittel über 1,5 ppm. Gemäß einer bevorzugten Ausführungsform der Erfindung liegt der Gesamtgehalt über 2,0 ppm, gemäß einer mehr bevorzugten Ausführungsform liegt der Gesamtgehalt bei über 3,0 ppm.

In Schritt a) des erfindungsgemäßen Verfahrens wird das in den Komponenten, die zur Herstellung des Beschichtungsmittels verwendet werden, enthaltene 5-Chlor-2-methyl-4-isothiazolon, mit Hilfe wenigstens einer 5-Chlor-2-methyl-4-isothiazolon-zersetzenden Verbindung zersetzt bzw. abgebaut, so dass der Gehalt an 5-Chlor-2-methyl-4-isothiazolon innerhalb eines Zeitraums von weniger als 24 Stunden, bezogen auf das gesamte Beschichtungsmittel, nur noch in einem Bereich von 0 bis 1 ppm liegt.

"Zersetzung des 5-Chlor-2-methyl-4-isothiazolons" bedeutet im Rahmen der vorliegenden Erfindung, dass das in den Komponenten enthaltene 5-Chlor-2-methyl-4-isothiazolon während der Herstellung des Beschichtungsmittels innerhalb eines Zeitraums von bis zu 24 Stunden, bevorzugt innerhalb eines Zeitraums von 0,5 bis 12 Stunden, besonders bevorzugt innerhalb eines Zeitraums von 2 bis 6 Stunden, irreversibel zersetzt beziehungsweise abgebaut wird, so dass nach diesem Zeitraum der Gehalt an 5-Chlor-2-methyl-4-isothiazolon, bezogen auf das hergestellte Beschichtungsmittel im Bereich von 0 bis 1 ppm, bevorzugt im Bereich von 0 bis 0,5 ppm, besonders bevorzugt im Bereich von 0 bis 0,2 ppm liegt. Innerhalb eines Zeitraums von bis zu 24 Stunden bedeutet dabei, dass das gesamte 5-Chlor-2-methyl-4-isothiazolon, das in den Komponenten, die zur Herstellung des Beschichtungsmittels verwendet werden enthalten ist, innerhalb von 24 Stunden ab dem Zeitpunkt des Kontakts mit der wenigstens einen 5-Chlor-2-methyl-4-isothiazolon-zersetzenden Verbindung zersetzt wird, so das der Gesamtgehalt an 5-Chlor-2-methyl-4-isothiazolon nach diesen 24 Stunden im Bereich von 0 bis 1 ppm, bezogen auf das Beschichtungsmittel, liegt.

Die Zersetzung des 5-Chlor-2-methyl-4-isothiazolons kann an jeder Stelle während der Herstellung des Beschichtungsmittels erfolgen. Das Mittel zur Zersetzung des 5-Chlor-2-methyl-4-isothiazolons kann daher zu Beginn der Herstellung des Beschichtungsmittels vorgelegt werden. Ebenfalls kann das Mittel zur Zersetzung des 5-Chlor-2-methyl-4-isothiazolons auch während bzw. nach der Zugabe der Einzelkomponenten des Beschichtungsmittels zugegeben werden. Gemäß einer Ausführungsform der Erfindung kann das Mittel zur Zersetzung des 5-Chlor-2-methyl-4-isothiazolons auf einmal oder Portionsweise zugesetzt werden.

Mittel zur Zersetzung des 5-Chlor-2-methyl-4-isothiazolons bedeutet im Rahmen der vorliegenden Erfindung eine Verbindung, die durch chemische Reaktion das 5-Chlor-2-methyl-4-isothiazolon zersetzt bzw. inaktiviert. Das Mittel zur Zersetzung des 5-Chlor-2-methyl-4-isothiazolons bewirkt dabei, dass der durch die Komponenten des Beschichtungsmittels eingetragene Gehalt an 5-Chlor-2-methyl-4-isothiazolon innerhalb der vorstehend definierten Zeiträume in dem Beschichtungsmittel auf den Gehalt im Bereich von 0 bis 1 ppm reduziert wird. Derartige Mittel bzw. Verbindungen sind dem Fachmann bekannt. Diese auszuwählen ist daher übliches fachmännisches Tun.

Gemäß einer bevorzugten Ausführungsform der Erfindung handelt es sich bei dem Mittel zur Zersetzung des 5-Chlor-2-methyl-4-isothiazolons um wenigstens eine Thiolverbindung.

Gemäß einer besonders bevorzugten Ausführungsform der Erfindung handelt es sich bei dem Mittel zur Zersetzung des 5-Chlor-2-methyl-4-isothiazolons um wenigstens eine Verbindung, die ausgewählt ist aus der Gruppe bestehend aus Cystein, Mercaptopyridin, Dithiothreitol, Glutathion, Mercaptoethansulfonat, Pyrithion und Natrium Formaldehyd Sulfoxylat. Gemäß einer bevorzugten Ausführungsform handelt es sich bei dem Pyrithion um einen Komplex des Pyrithions mit einer Löslichkeit in Wasser bei Raumtemperatur von größer 100 mg/l.

Gemäß einer besonders bevorzugten Ausführungsform der Erfindung handelt es sich bei dem Mittel zur Zersetzung des 5-Chlor-2-methyl-4-isothiazolons um Cystein.

Gemäß einer weiteren Ausführungsform der Erfindung handelt es sich bei dem Mittel zur Zersetzung des 5-Chlor-2-methyl-4-isothiazolons um wenigstens einen Zinkkomplex des Cysteins.

Die Menge, der zur Zersetzung des 5-Chlor-2-methyl-4-isothiazolons verwendeten Verbindung(en) bzw. deren molares Verhältnis zu dem durch die Komponenten eingetragenen 5-Chlor-2-methyl-4-isothiazolon kann über weite Bereiche hinweg variieren. Üblicherweise liegt das molare Verhältnis des ursprünglich enthaltenen 5-Chlor-2-methyl-4-isothiazolons zu der wenigstens einen Verbindung mit der dies zersetzt wird im Bereich von 20:1 bis 1:20, bevorzugt im Bereich von 5:1 bis 1:5, besonders bevorzugt im Bereich von 2:1 bis 1:2.

Gemäß einer Ausführungsform der Erfindung ist das erfindungsgemäße Verfahren dadurch gekennzeichnet, dass zur Zersetzung des 5-Chlor-2-methyl-4-isothiazolons in Verfahrensschritt a) Cystein in einer Menge im Bereich von 1 bis 200 ppm, bevorzugt 5 bis 25 ppm, bezogen auf das hergestellte Beschichtungsmittel, hinzugegeben wird.

In Schritt b) des erfindungsgemäßen Verfahrens werden die einzelnen Bestandteile des Beschichtungsmittels nicht abschließend ausgewählt aus der Gruppe bestehend aus Wasser, Bindemittel, Pigment, Netzmittel, Verdicker, Tixotropiermittel, pH regulierenden Verbindungen, Füllstoffen und Dispergiermitteln miteinander vermischt. Die einzelnen Bestandteile des Beschichtungsmittels, sowie deren jeweilige Anteile variieren dabei in Abhängigkeit des herzustellenden Beschichtungsmittels. Es liegt jedoch im Bereich des üblichen fachmännischen Tuns, die einzelnen Bestandteile auszuwählen, und in entsprechender Menge bei der Herstellung des gewünschten Beschichtungsmittels in entsprechender Menge hinzuzugeben.

Gemäß einer Ausführungsform der Erfindung wird in Verfahrensschritt b) als eine Komponente des herzustellenden Beschichtungsmittels ein Bindemittel bzw. eine Polymeremulsion verwendet, dessen bzw. deren Gehalt an 5-Chlor-2-methyl-4-isothiazolon im Bereich von 5 bis 30 ppm oder im Bereich von 5 bis 20 ppm liegt. Die Verwendung eines solchen Bindemittels bzw. einer solchen Polymeremulsion, die mit einem Anteil von 5 bis 50 Gew.-% oder 10 bis 25 Gew.-%, bezogen auf das Beschichtungsmittel, einen der Hauptbestandteile des Beschichtungsmittels ausmacht, führt dazu, dass meist schon durch die Verwendung eines solchen Bindemittels ein Beschichtungsmittel mit einem Gehalt an 5-Chlor-2-methyl-4-isothiazolon über 1,5 ppm, erhalten werden würde. Das Verfahren gemäß der vorliegenden Erfindung ermöglicht es jedoch das 5-Chlor-2-methyl-4-isothiazolon nahezu selektiv zu zersetzen. Durch diese Maßnahme wird ein Beschichtungsmittel mit einem durch 5-Chlor-2-methyl-4-isothiazolon hervorgerufenen nahezu vernachlässigbaren sensibilisierenden Potential erhalten.

Durch die Zersetzung des 5-Chlor-2-methyl-4-isothiazolons bzw. durch den Abbau des 5-Chlor-2-methyl-4-isothiazolons wäre das hergestellte Beschichtungsmittel nahezu frei von Konservierungsmitteln, und würde dem mikrobiologischen Abbau unterliegen und verderben, wenn ihm keine neuen Konservierungsmittel zugesetzt werden würden. Daher wird im Rahmen des erfindungsgemäßen Verfahrens in Verfahrensschritt c) wenigstens ein Konservierungsmittel ausgewählt aus der Gruppe bestehend aus 2-Methylisothiazolin-3-on (MIT), 1,2-Benzisothiazolin-3-on (BIT), N-Methyl-1,2-benzisothiazolin-3-on (M-BIT) und 2-n-Octylisothiazolin-3-on (OIT) hinzugegeben. Weitere Konservierungsmittel, die zusätzlich zu dem wenigstens einen, vorstehend genannten, hinzugegeben werden können sind ausgewählt aus der Gruppe 3-Iod-2-propinyl-N-butylcarbamat (IPBC), 2-Brom-2-nitropropan-1,3-diol (Bronopol), Formaldehyd, Zinkpyrithion und Dibrom-3-nitrilopropionsäureamid. Die vorstehend genannten Konservierungsmittel können bei der Herstellung des Beschichtungsmittels vor, während oder nach der Zersetzung des 5-Chlor-2-methyl-4-isothiazolons hinzugegeben werden.

Die Anwendungskonzentrationen der in Verfahrensschritt c) hinzugegebenen Konservierungsmittel liegen, bezogen auf alle hinzugegebenen Konservierungsmittel, üblicherweise im Bereich von 10 bis 1000 ppm, bevorzugt im Bereich von 20 bis 500 ppm, und insbesondere bevorzugt im Bereich von 30 bis 200 ppm, bezogen auf deren Konzentration in dem fertigen Beschichtungsmittel.

Gemäß einer bevorzugten Ausführungsform der Erfindung wird in Verfahrensschritt c) ein Gemisch aus 2-Methylisothiazolin-3-on (MIT) und 1,2-Benzisothiazolin-3-on (BIT) im Gewichtsverhältnis von 5:1 bis 1:5, bevorzugt im Gewichtsverhältnis von 2:1 bis 1:1 als Konservierungsmittel hinzugegeben.

Im Rahmen der Erfindung hat sich überraschenderweise herausgestellt, dass das in Verfahrensschritt c) hinzugegebene, wenigstens eine Konservierungsmittel aus der Familie der Isothiazolinone durch die 5-Chlor-2-methyl-4-isothiazolon-zersetzende Verbindung lediglich in geringem Maße zersetzt bzw. abgebaut wird. So wurde festgestellt, dass das wenigstens eine in Verfahrensschritt c) hinzugegebene Konservierungsmittel in dem Beschichtungsmittel über einen Zeitraum von 24 Stunden zu weniger als 10 Gew.-%, bevorzugt zu weniger als 5 Gew.-% von der 5-Chlor-2-methyl-4-isothiazolon-zersetzende Verbindung zersetzt bzw. abgebaut wird. Das erfindungsgemäße Verfahren zeichnet sich in diesem Fall in vorteilhafter Weise dadurch aus, dass die 5-Chlor-2-methyl-4-isothiazolon-zersetzende Verbindung das 5-Chlor-2-methyl-4-isothiazolon nahezu komplett und selektiv zersetzt, die in Verfahrenschritt c) hinzugegebenen Konservierungsmittel, die aus der gleichen chemischen Familie wie das 5-Chlor-2-methyl-4-isothiazolon stammen, jedoch in kaum nennenswertem Umfang zersetzt werden.

Gemäß einer bevorzugten Ausführungsform der Erfindung wird in Verfahrensschritt c) ein Gemisch aus 2-Methylisothiazolin-3-on und 1,2-Benzisothiazolin-3-on im Gewichtsverhältnis von 5:1 bis 1:5, bevorzugt im Gewichtsverhältnis von 2:1 bis 1:1 als Konservierungsmittel hinzugegeben, und dieses innerhalb eines Zeitraums von 24 Stunden durch die wenigstens eine 5-Chlor-2-methyl-4-isothiazolon-zersetzende Verbindung nach dem ersten Kontakt mit dieser zu weniger als 10 Gew.-%, bevorzugt zu weniger als 5 Gew.-% zersetzt.

Gemäß einer besonders bevorzugten Ausführungsform der Erfindung wird in Verfahrensschritt c) ein Gemisch aus 2-Methylisothiazolin-3-on und 1,2-Benzisothiazolin-3-on im Gewichtsverhältnis von 5:1 bis 1:5, bevorzugt im Gewichtsverhältnis von 2:1 bis 1:1 als Konservierungsmittel hinzugegeben und als 5-Chlor-2-methyl-4-isothiazolon-zersetzende Verbindung Cystein verwendet. Die Einsatzmenge des Gemischs aus 2-Methylisothiazolin-3-on und 1,2-Benzisothiazolin-3-on liegt dabei bevorzugt bei 30 bis 200 ppm (bezogen auf das Gemisch), die des Cysteins 5 bis 200 ppm, jeweils bezogen auf das Beschichtungsmittel.

Die vorliegende Erfindung betrifft gemäß einer bevorzugten Ausführungsform ein Verfahren zum Herstellen eines Beschichtungsmittels ausgewählt aus Farben und Putzen mit einem 5-Chlor-2-methyl-4-isothiazolon-Gehalt im Bereich von 0 bis 1 ppm, unter Verwendung von Komponenten, die in Summe über 1,5 ppm 5-Chlor-2-methyl-4-isothiazolon in das Beschichtungsmittel eintragen würden, umfassend die Schritte:
a) Zersetzen des in den Komponenten des Beschichtungsmittels enthaltenen 5-Chlor-2-methyl-4-isothiazolons, mit Hilfe von Cystein, so dass der Gehalt an 5-Chlor-2-methyl-4-isothiazolon innerhalb eines Zeitraums von weniger als 24 Stunden in einem Bereich von 0 bis 1 ppm liegt,
b) Vermischen der einzelnen Bestandteile des Beschichtungsmittels, nicht abschließend ausgewählt aus der Gruppe umfassend Wasser, Bindemittel, Pigment, Netzmittel, Verdicker, Tixotropiermittel, pH regulierenden Verbindungen, Füllstoffen und Dispergiermitteln, und
c) Hinzugeben wenigstens eines Konservierungsmittels ausgewählt aus der Gruppe bestehend aus 2-Methylisothiazolin-3-on und 1,2-Benzisothiazolin-3-on oder einer Mischung aus 2-Methylisothiazolin-3-on und 1,2-Benzisothiazolin-3-on,
dadurch gekennzeichnet, dass das in Verfahrensschritt c) hinzugegebene, wenigstens eine Konservierungsmittel durch die wenigstens eine 5-Chlor-2-methyl-4-isothiazolon-zersetzenden Verbindung über einen Zeitraum von 24 Stunden zu weniger als 10% zersetzt wird.

Die Erfindung betrifft ein Verfahren zur Herstellung eines Beschichtungsmittels umfassend die Verfahrensschritten a), b) und c). Hierunter ist zu verstehen, dass während der Herstellung des Beschichtungsmittels die Verfahrensschritte a), b) und c) in beliebiger Reihenfolge durchzuführen sind.

### Die folgenden Beispiele dienen zur weiteren Veranschaulichung der vorliegenden Erfindung:

### Beispiel 1

Ausgehend von einer Basisrezeptur wurde eine wasserbasierende Dispersionsfarbe auf Latexbasis mit einem pH-Wert von 7,5 hergestellt. Der durch die einzelnen Bestandteile der Farbe eingetragene Gehalt an 5-Chlor-2-methyl-4-isothiazolongehalt lag bei 6 ppm. Nach der Herstellung der Farbe wurde als Konservierungsmittel eine Mischung aus Methylisothiazolin-3-on (MIT) und 1,2-Benzisothiazolin-3-on (BIT) hinzugegeben. Daran anschließend werden die in der Tabelle 1 angegebenen Inhibitoren in unterschiedlichen Mengen hinzugegeben. Die einzelnen Proben werden direkt nach Zugabe des Inhibitors (0 Stunden) sowie nach 2 und 24 Stunden sowie nach 3 Monaten auf ihren Gehalt an 5-Chlor-2-methyl-4-isothiazolon (CMIT), 2-Methylisothiazolin-3-on (MIT) und 1,2-Benzisothiazolin-3-on (BIT) hin analysiert. Die Versuchsergebnisse sind in Tabelle 1 dargestellt.

**Tabelle 1**

| Zeit Probe | 0 h | | | 2 h | | | 24 h | | | 3 Monate | | | Inhibitor |
|---|---|---|---|---|---|---|---|---|---|---|---|---|---|
| | MIT | CIT | BIT | MIT | CIT | BIT | MIT | CIT | BIT | MIT | CIT | BIT | |
| 1 | 95 | 6 | 88 | 94 | 6 | 88 | 95 | 6 | 88 | 94 | 2 | 79 | Blank |
| 2 | 95 | 6 | 88 | 90 | 5 | 82 | 89 | n.n. | 80 | 86 | n.n | 78 | 50 ppm Natrium Formaldehyd Sulfoxylat |
| 3 | 95 | 6 | 88 | 91 | 6 | 82 | 90 | 1 | 82 | 88 | n.n | 76 | 10 ppm Natrium Formaldehyd Sulfoxylat |
| 4 | 95 | 6 | 88 | 95 | n.n. | 85 | n.a. | n.a. | n.a | 91 | n.n | 75 | 50 ppm Cystein |
| 5 | 95 | 6 | 88 | 94 | 1 | 87 | 93 | n.n. | 86 | 92 | n.n | 77 | 10 ppm Cystein |
| 6 | 95 | 6 | 88 | 92 | n.n. | 85 | n.a. | n.a. | n.a | 90 | n.n | 73 | 50 ppm Mercaptopyridin |
| 7 | 95 | 6 | 88 | 92 | 3 | 86 | 93 | n..n. | 85 | 91 | n.n | 75 | 10 ppm Mercaptopyridin |
| 8 | 95 | 6 | 88 | 90 | 2 | 83 | 91 | n.n. | 84 | 89 | n.n | 75 | 10 ppm Dithiothreitol |
| 9 | 95 | 6 | 88 | 92 | 3 | 85 | 91 | n.n. | 84 | 90 | n.n | 74 | 10 ppm Glutathion |
| 10 | 95 | 6 | 88 | 94 | 1 | 83 | n.a. | n.n. | n.a. | 89 | n.n | 73 | 10 ppm Na-2-Mercaptoethansulfonat |
| Gehalte an MIT, CMIT und BIT jeweils angegeben in ppm. | | | | | | | | | | | | | |
| n.n. = nicht nachweisbar, n.a. = nicht analysiert | | | | | | | | | | | | | |

Aus den in Tabelle 1 dargestellten Versuchsergebnissen geht hervor, dass der Gehalt an 5-Chlor-2-methyl-4-isothiazolon in dem Beschichtungsmittel durch Zugabe des Inhibitors innerhalb eines Zeitraums von 24 Stunden auf einen Bereich unterhalb von 1 ppm gesenkt werden kann, ohne dass die weiteren, als Konservierungsmittel enthaltenen Isothiazolone in vergleichbarem Maße abgebaut werden.

### Beispiel 2

Ausgehend von einer Basisrezeptur wurde eine wasserbasierende Dispersionsfarbe auf Latexbasis mit einem pH-Wert von 8,5 hergestellt. Der durch die einzelnen Bestandteile der Farbe eingetragene Gehalt an 5-Chlor-2-methyl-4-isothiazolongehalt lag bei 6 ppm. Nach der Herstellung der Farbe wurde als Konservierungsmittel eine Mischung aus Methylisothiazolin-3-on (MIT) und 1,2-Benzisothiazolin-3-on (BIT) hinzugegeben. Daran anschließend werden die in der Tabelle 1 angegebenen Inhibitoren in unterschiedlichen Mengen hinzugegeben. Die einzelnen Proben werden direkt nach Zugabe des Inhibitors (0 Stunden) sowie nach 24 Stunden sowie nach 3 Monaten auf ihren Gehalt an 5-Chlor-2-methyl-4-isothiazolon (CMIT), 2-Methylisothiazolin-3-on (MIT) und 1,2-Benzisothiazolin-3-on (BIT) hin analysiert. Die Versuchsergebnisse sind in Tabelle 2 dargestellt.

**Tabelle 2**

| Zeit Probe | 0 h | | | 24 h | | | 3 Monate | | | Inhibitor |
|---|---|---|---|---|---|---|---|---|---|---|
| | MIT | CIT | BIT | MIT | CIT | BIT | MIT | CIT | BIT | |
| 1 | 105 | 6 | 91 | 106 | 6 | 90 | 104 | 2 | 78 | Blank |
| 2 | 105 | 6 | 91 | 104 | n.n. | 90 | 101 | n.n. | 73 | 100 ppm Natrium Formaldehyd Sulfoxylat |
| 3 | 105 | 6 | 91 | 106 | n.n. | 92 | 100 | n.n. | 75 | 50 ppm Natrium Formaldehyd Sulfoxylat |
| 4 | 105 | 6 | 91 | 107 | n.n. | 90 | 104 | n.n. | 77 | 10 ppm Cystein |
| 5 | 105 | 6 | 91 | 105 | n.n. | 92 | 105 | n.n. | 75 | 10 ppm Mercaptopyridine |
| 6 | 105 | 6 | 91 | 103 | n.n. | 90 | 100 | n.n. | 75 | 10 ppm Dithiothreitol |
| 7 | 105 | 6 | 91 | 103 | n.n. | 91 | 102 | n.n. | 76 | 10 ppm Glutathion |
| 8 | 105 | 6 | 91 | 103 | n.n. | 91 | 101 | n.n. | 72 | 10 ppm Na-2-Mercaptoethansulfonat |
| Gehalte an MIT, CMIT und BITjeweils angegeben in ppm. | | | | | | | | | | |
| n.n. = nicht nachweisbar; n.a. = nicht analysiert | | | | | | | | | | |

Aus den in Tabelle 2 dargestellten Versuchsergebnissen geht hervor, dass der Gehalt an 5-Chlor-2-methyl-4-isothiazolon in dem Beschichtungsmittel durch Zugabe des Inhibitors innerhalb eines Zeitraums von 24 Stunden auf einen Bereich unterhalb von 1 ppm gesenkt werden kann, ohne dass die weiteren, als Konservierungsmittel enthaltenen Isothiazolone in vergleichbarem Maße abgebaut werden.

## Patentansprüche

1. Verfahren zum Herstellen eines Beschichtungsmittels ausgewählt aus Farben und Putzen mit einem 5-Chlor-2-methyl-4-isothiazolon-Gehalt im Bereich von 0 bis 1 ppm, unter Verwendung von Komponenten, die in Summe über 1,5 ppm 5-Chlor-2-methyl-4-isothiazolon in das Beschichtungsmittel eintragen würden, umfassend die Schritte:
a) Zersetzen des in den Komponenten des Beschichtungsmittels enthaltenen 5-Chlor-2-methyl-4-isothiazolons, mit Hilfe wenigstens einer 5-Chlor-2-methyl-4-isothiazolon-zersetzenden Verbindung, so dass der Gehalt an 5-Chlor-2-methyl-4-isothiazolon innerhalb eines Zeitraums von weniger als 24 Stunden in einem Bereich von 0 bis 1 ppm liegt,
b) Vermischen der einzelnen Bestandteile des Beschichtungsmittels, nicht abschließend ausgewählt aus der Gruppe umfassend Wasser, Bindemittel, Pigment, Netzmittel, Verdicker, Tixotropiermittel, pH regulierenden Verbindungen, Füllstoffen und Dispergiermitteln, und
c) Hinzugeben wenigstens eines Konservierungsmittels ausgewählt aus der Gruppe bestehend aus 2-Methylisothiazolin-3-on (MIT), 1,2-Benzisothiazolin-3-on (BIT), N-Methyl-1,2-benzisothiazolin-3-on (M-BIT) und 2-n-Octylisothiazolin-3-on (OIT),
**dadurch gekennzeichnet, dass** das in Verfahrensschritt c) hinzugegebene, wenigstens eine Konservierungsmittel durch die wenigstens eine 5-Chlor-2-methyl-4-isothiazolon-zersetzenden Verbindung über einen Zeitraum von 24 Stunden zu weniger als 10% zersetzt wird.

2. Verfahren nach Anspruch 1, **dadurch gekennzeichnet, dass** das in den Komponenten des Beschichtungsmittels enthaltene 5-Chlor-2-methyl-4-isothiazolon mit Hilfe wenigstens einer Thiolverbindung zersetzt wird.

3. Verfahren nach Anspruch 1, **dadurch gekennzeichnet, dass** die 5-Chlor-2-methyl-4-isothiazolon-zersetzende Verbindung ausgewählt ist aus der Gruppe bestehend aus Cystein, Pyrithion, Natriumpyrithion, Mercaptopyridin, Dithiothreitol, Glutathion, Mercaptoethansulfonat und Natrium Formaldehyd Sulfoxylat.

4. Verfahren nach einem der Ansprüche 1 bis 3, **dadurch gekennzeichnet, dass** Gewichts-Verhältnis des gesamten in den Komponenten, die zur Herstellung des Beschichtungsmittels eingesetzten werden, enthaltenen 5-Chlor-2-methyl-4-isothiazolons zu der wenigstens einen Verbindung mit der dies zersetzt wird, im Bereich von 20:1 bis 1:20 liegt.

5. Verfahren nach einem der Ansprüche 1 bis 4, **dadurch gekennzeichnet, dass** in Verfahrensschritt c) ein Gemisch aus 2-Methylisothiazolin-3-on (MIT) und 1,2-Benzisothiazolin-3-on (BIT) als Konservierungsmittel hinzugegeben wird.

6. Verfahren nach einem der Ansprüche 1 bis 5, **dadurch gekennzeichnet, dass** zur Zersetzung des 5-Chlor-2-methyl-4-isothiazolons in Verfahrensschritt a) Cystein in einer Menge im Bereich von 1 bis 200 ppm, bezogen auf das hergestellte Beschichtungsmittel, hinzugegeben wird.

## Claims

1. A method for producing a coating agent selected from paints and plasters having a 5-chloro-2-methyl-4-isothiazolone content in the range from 0 to 1 ppm, using components which would introduce in total more than 1.5 ppm of 5-chloro-2-methyl-4-isothiazolone into the coating agent, comprising the steps:
a) decomposing the 5-chloro-2-methyl-4-isothiazolone present in the components of the coating agent with the help of at least one 5-chloro-2-methyl-4-isothiazolone-decomposing compound, such that the content of 5-chloro-2-methyl-4-isothiazolone is in a range from 0 to 1 ppm over the course of a period of less than 24 hours,
b) mixing the individual constituents of the coating agent, not definitively selected from the group comprising water, binder, pigment, wetting agent, thickener, thixotropic agent, pH regulating compounds, fillers and dispersants, and
c) adding at least one preservative selected from the group consisting of 2-methylisothiazolin-3 -one (MIT), 1,2-benzisothiazolin-3 -one (BIT), N-methyl-1,2-benzisothiazolin-3 -one (M-BIT) and 2-n-octylisothiazolin-3 -one (OIT),
**characterized in that** the at least one preservative added in method step c) is decomposed over a period of 24 hours to less than 10% by the at least one 5-chloro-2-methyl-4-isothiazolone-decomposing compound.

2. The method as claimed in claim 1, **characterized in that** the 5-chloro-2-methyl-4-isothiazolone present in the components of the coating agent is decomposed with the help of at least one thiol compound.

3. The method as claimed in claim 1, **characterized in that** the 5-chloro-2-methyl-4-isothiazolone-decomposing compound is selected from the group consisting of cysteine, pyrithione, sodium pyrithione, mercaptopyridine, dithiothreitol, glutathione, mercaptoethansulfonate and sodium formaldehyde sulfoxylate

4. The method according to one of claims 1 to 3, **characterized in that** weight ratio of the total 5-chloro-2-methyl-4-isothiazolone present in the components that are used for producing the coating agent to the at least one compound with which this is decomposed is in the range from 20:1 to 1:20.

5. The method according to one of claims 1 to 4, **characterized in that**, in method step c), a mixture of 2-methylisothiazolin-3-one (MIT) and 1,2-benzisothiazolin-3-one (BIT) is added as preservative.

6. The method according to one of claims 1 to 5, **characterized in that**, for the decomposition of the 5-chloro-2-methyl-4-isothiazolone in method step a), cysteine is added in an amount in the range from 1 to 200 ppm, based on the produced coating agent.

## Revendications

1. Procédé de fabrication d'un agent de revêtement choisi parmi les peintures et les enduits ayant une teneur en 5-chloro-2-méthyl-4-isothiazolone dans la plage allant de 0 à 1 ppm, utilisant des composants qui introduiraient au total plus de 1,5 ppm de 5-chloro-2-méthyl-4-isothiazolone dans l'agent de revêtement, comprenant les étapes suivantes :
a) la décomposition de la 5-chloro-2-méthyl-4-isothiazolone contenue dans les composants de l'agent de revêtement à l'aide d'au moins un composé décomposant la 5-chloro-2-méthyl-4-isothiazolone, de telle sorte que la teneur en 5-chloro-2-méthyl-4-isothiazolone se situe dans une plage allant de 0 à 1 ppm en une durée de moins de 24 heures,
b) le mélange des constituants individuels de l'agent de revêtement, choisis de manière non exhaustive dans le groupe comprenant l'eau, les liants, les pigments, les agents mouillants, les épaississants, les agents thixotropiques, les composés régulant le pH, les charges et les agents de dispersion, et
c) l'ajout d'au moins un agent conservateur choisi dans le groupe constitué par la 2-méthylisothiazolin-3-one (MIT), la 1,2-benzisothiazolin-3-one (BIT), la N-méthyl-1,2-benzisothiazolin-3-one (M-BIT) et la 2-n-octylisothiazolin-3-one (OIT),
**caractérisé en ce que** ledit au moins un agent conservateur ajouté à l'étape de procédé c) est décomposé par ledit au moins un composé décomposant la 5-chloro-2-méthyl-4-isothiazolone à hauteur de moins de 10 % en une durée de 24 heures.

2. Procédé selon la revendication 1, **caractérisé en ce que** la 5-chloro-2-méthyl-4-isothiazolone contenue dans les composants de l'agent de revêtement est décomposée à l'aide d'au moins un composé de thiol.

3. Procédé selon la revendication 1, **caractérisé en ce que** le composé décomposant la 5-chloro-2-méthyl-4-isothiazolone est choisi dans le groupe constitué par la cystéine, la pyrithione, la pyrithione de sodium, la mercaptopyridine, le dithiothréitol, la glutathione, le sulfonate de mercaptoéthane et le sulfoxylate de formaldéhyde sodique.

4. Procédé selon l'une quelconque des revendications 1 à 3, **caractérisé en ce que** le rapport en poids entre la totalité de la 5-chloro-2-méthyl-4-isothiazolone contenue dans les composants qui sont utilisés pour la fabrication de l'agent de revêtement et ledit au moins un composé avec lequel celle-ci est décomposée se situe dans la plage allant de 20:1 à 1:20.

5. Procédé selon l'une quelconque des revendications 1 à 4, **caractérisé en ce qu'**à l'étape de procédé c), un mélange de 2-méthylisothiazolin-3-one (MIT) et de 1,2-benzisothiazolin-3-one (BIT) est ajouté en tant qu'agent conservateur.

6. Procédé selon l'une quelconque des revendications 1 à 5, **caractérisé en ce que** de la cystéine est ajoutée en une quantité dans la plage allant de 1 à 200 ppm, par rapport à l'agent de revêtement fabriqué, pour la décomposition de la 5-chloro-2-méthyl-4-isothiazolone à l'étape de procédé a).
